# FASCICULE DE BREVET EUROPEEN

(11) **EP 3 980 638 B1**
(45) Date de publication et mention de la délivrance du brevet: **18.02.2026**
(21) Numéro de dépôt: 20731531.8
(22) Date de dépôt: 27.04.2020
(51) Int. Cl.: F02K 5/00, F01D 15/10, F02C 7/26, F02C 7/266

(54) **PROCEDE DE REGULATION D'UNE ACCELERATION D'UNE TURBOMACHINE**
VERFAHREN ZUR REGELUNG DER BESCHLEUNIGUNG EINER TURBOMASCHINE
METHOD FOR REGULATING THE ACCELERATION OF A TURBOMACHINE

(30) Priorité: 06.06.2019 FR 1906001
(43) Date de publication de la demande: 13.04.2022
(73) Titulaire: SAFRAN AIRCRAFT ENGINES, 75015 Paris (FR)
(72) Inventeur: CUVILLIER, Romain, Guillaume, 77550 MOISSY-CRAMAYEL (FR); CABRERA, Pierre, 77550 MOISSY-CRAMAYEL (FR)
(74) Mandataire: Cabinet Beau de Loménie
(86) Numéro de dépôt international: PCT/FR2020/050716
(87) Numéro de publication internationale: WO 2020/245516

(56) Documents cités:
- WO-A1-2005/028832
- FR-A1- 2 914 697
- FR-A1- 3 066 444

## Description

### Domaine Technique

La présente invention se rapporte au domaine général des turbomachines pour aéronef.

### Technique antérieure

De manière générale, une turbomachine pour aéronef comprend un arbre haute pression (arbre HP) entrainé en rotation par une turbine haute pression (turbine HP), et un arbre basse pression (arbre BP) entrainé en rotation par une turbine basse pression (BP), l'arbre basse pression entrainant en rotation une soufflante de la turbomachine.

Lors d'une phase d'accélération de la turbomachine, un décalage peut se produire entre l'arbre haute pression (HP) et l'arbre basse pression (BP) de la turbomachine pour atteindre la vitesse de rotation cible. La demanderesse s'est en effet aperçu que l'arbre basse pression tend à accélérer moins vite que l'arbre haute pression, et ainsi l'arbre basse pression arrive à sa vitesse de rotation cible en retard par rapport à l'arbre haute pression. La Demanderesse s'est aperçu que le retard dans l'accélération de l'arbre basse pression augmente fortement lorsque qu'un réducteur est placé entre l'arbre basse pression et la soufflante.

Le retard dans l'accélération de l'arbre basse pression entraine un retard dans l'accélération de la soufflante, augmentant ainsi la durée entre l'instruction d'accélération et le moment où la poussée cible est obtenue. FR 2914697 A1 et WO 2005/028832 A1 divulguent des turbomachines hybrides appartenant à l'état de la technique.

### Exposé de l'invention

La présente invention a donc pour but principal de fournir une solution répondant au problème décrit précédemment.

Selon un premier aspect, l'invention concerne un procédé de régulation d'une accélération d'une turbomachine selon la revendication 1.

Un tel procédé de régulation permet de réduire le retard entre l'accélération de l'arbre haute pression et l'arbre basse pression. Au début de la phase d'accélération, on injecte de la puissance sur l'arbre haute pression pour l'aider à accélérer, puis on stoppe l'accélération de l'arbre haute pression de sorte à permettre une forte accélération de l'arbre basse pression : l'arbre basse pression atteint ainsi plus rapidement son régime cible que dans l'art antérieur. De manière plus globale, les durées d'accélération de l'arbre haute pression et de l'arbre basse pression sont chacune plus courtes que dans l'art antérieur.

Selon une caractéristique possible, la turbomachine comprend un compresseur haute pression qui est situé en amont de la chambre de combustion et qui est entrainé en rotation par l'arbre haute pression, le procédé comprenant l'étape suivante: surveillance du compresseur haute pression en déterminant un paramètre de pompage du compresseur haute pression, l'étape d'injection de puissance mécanique sur l'arbre haute pression étant réalisée si le paramètre de pompage du compresseur haute pression atteint une valeur seuil.

Selon un deuxième aspect, l'invention concerne une turbomachine pour aéronef selon la revendication 3.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente schématiquement une turbomachine pour aéronef selon un premier mode de réalisation.
[Fig. 2] La figure 2 représente schématiquement une turbomachine pour aéronef selon un deuxième mode de réalisation.

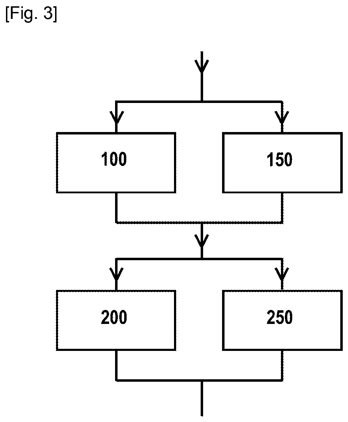

[Fig. 3] La figure 3 représente schématiquement des étapes d'un procédé de régulation d'accélération d'une turbomachine.

### Description des modes de réalisation

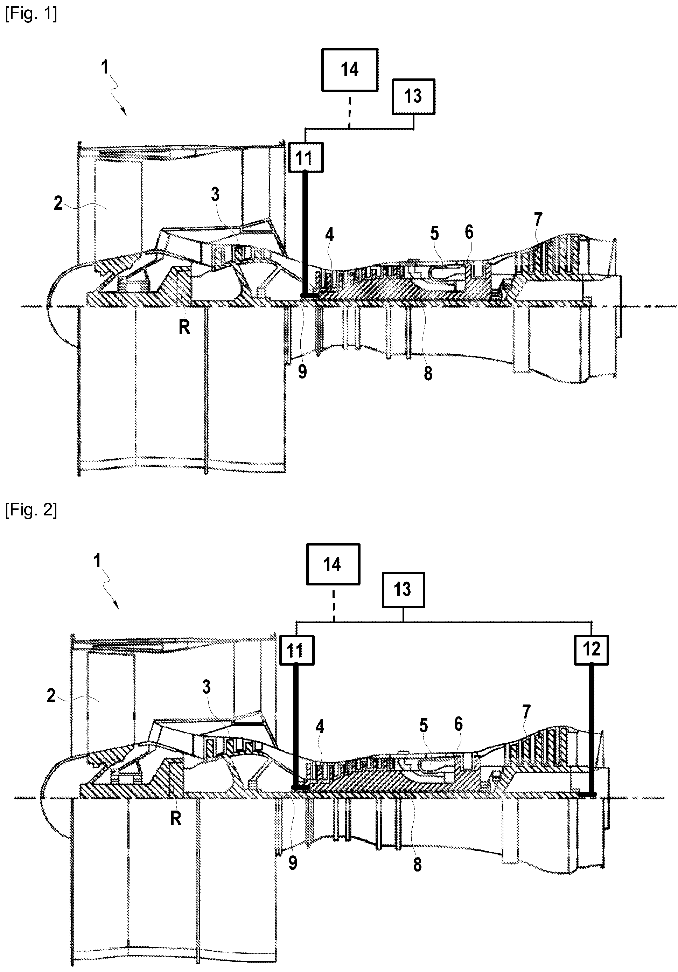

La figure 1 illustre schématiquement une turbomachine 1 d'aéronef à double corps et double flux comprenant, de l'amont vers l'aval, dans le sens d'écoulement du flux d'air, une soufflante 2, un compresseur basse pression (BP) 3, un compresseur haute pression (HP) 4, une chambre de combustion 5, une turbine haute pression (HP) 6, et une turbine basse pression (BP) 7.

La turbine haute pression 6 est reliée au compresseur haute pression 4 par un arbre haute pression 8, et la turbine basse pression 7 est reliée au compresseur basse pression 3 et à la soufflante 2 par un arbre basse pression 9.

En outre, comme cela est illustré sur les figures 1 et 2, la turbomachine 1 peut comprendre un réducteur R qui relie la soufflante 2 à l'arbre basse pression 9, le réducteur R permettant ainsi de découpler les vitesses de rotation de la soufflante 2 et de la turbine basse pression 9. Cependant, l'invention peut également être utilisée pour une turbomachine 1 dans laquelle la soufflante 2 est directement reliée à l'arbre basse pression 3 et est ainsi directement couplée à la turbine basse pression 7.

L'invention est toutefois plus avantageuse lorsque la turbomachine 1 comprend un réducteur R, la Demanderesse s'étant en effet aperçue que l'inertie du corps basse pression est augmentée lorsque la turbomachine 1 comprend le réducteur R.

La turbomachine 1 comprend une première machine électrique **11** qui est reliée à l'arbre haute pression 8. La première machine électrique **11** est une machine réversible qui est configurée pour d'une part fonctionner en mode générateur électrique et ainsi prélever de la puissance mécanique sur l'arbre haute pression 8, et d'autre part pour fonctionner en mode moteur électrique et ainsi injecter de la puissance électrique sur l'arbre haute pression 8. Selon une autre variante possible, la première machine électrique **11** est un générateur électrique et n'est pas réversible, ladite première machine électrique 11 ne pouvant pas fonctionner en tant que moteur électrique dans cette variante.

Comme illustré sur la figure 2, la turbomachine 1 peut comprendre une deuxième machine électrique 12 qui est reliée à l'arbre basse pression 9. La deuxième machine électrique 12 peut être un moteur électrique qui est configuré pour injecter de la puissance mécanique sur l'arbre basse pression 9. La deuxième machine électrique peut être une machine réversible qui est configurée pour d'une part fonctionner en mode générateur électrique et ainsi prélever de la puissance mécanique sur l'arbre basse pression 9, et d'autre part pour fonctionner en mode moteur électrique et ainsi injecter de la puissance mécanique sur l'arbre basse pression 9. Selon une autre variante possible, la deuxième machine électrique 12 est un moteur électrique et n'est pas réversible, ladite deuxième machine électrique 12 ne pouvant pas fonctionner en tant que générateur électrique dans cette variante.

La turbomachine 1 comprend un système de contrôle 13 qui est relié à la première machine électrique 11 et à la deuxième machine électrique 12. Le système de contrôle 13 est configuré pour mettre en œuvre un procédé de régulation d'accélération de la turbomachine 1 afin de réduire le temps pris par ladite turbomachine 1 pour accélérer. Autrement dit, le procédé mis en œuvre par le système de contrôle 13 permet de réduire le délai entre l'instruction d'accélération et le moment où la turbomachine 1 génère la poussée cible. Le procédé permet notamment de réduire le délai pour atteindre la poussée de décollage.

Le procédé de régulation d'accélération de la turbomachine 1 mis en œuvre par le système de contrôle 13 comprend les étapes suivantes :
- Injection 100 de puissance mécanique sur l'arbre haute pression 8 jusqu'à ce qu'un régime de l'arbre haute pression 8 atteigne une valeur cible, puis
- Prélèvement 200 de puissance mécanique sur l'arbre haute pression 8 de sorte à maintenir le régime à la valeur cible par la première machine électrique 11.

La première machine électrique 11, fonctionnant en mode moteur électrique, est ainsi commandée par le système de contrôle 13 pour accélérer l'arbre haute pression 8 jusqu'à ce qu'il atteigne le régime cible. Puis, la première machine électrique 11, fonctionnant en mode générateur électrique, est commandée par le système de contrôle 13 pour prélever de la puissance mécanique sur l'arbre haute pression 8 lorsque l'arbre haute pression 8 a atteint le régime cible.

La Demanderesse s'est rendue compte que brider la vitesse de rotation de l'arbre haute pression 8 lorsque le corps haute pression de la turbomachine 1 a atteint le régime cible (en prélevant de la puissance mécanique sur l'arbre haute pression) permet d'accélérer la montée en régime du corps basse pression de la turbomachine 1 et ainsi permet d'obtenir la poussée cible plus rapidement. En effet, la vitesse de rotation de l'arbre haute pression 6 étant bridée, d'avantage d'énergie est transmise vers l'arbre basse pression 7.

Le système de contrôle 13 peut réguler l'accélération de la turbomachine en utilisant le régime corrigé de l'arbre haute pression 8. Le régime corrigé de l'arbre haute pression 8 correspond à la vitesse de rotation de l'arbre haute pression 8 qui est pondérée par la température.

Selon une variante avantageuse permettant de réduire d'avantage la durée d'accélération du corps basse pression de la turbomachine 1, lorsque ledit arbre haute pression 8 a atteint le régime cible, la puissance mécanique prélevée sur l'arbre haute pression 8 est injectée sur l'arbre basse pression 9 (étape 250).

Cette variante peut être mise en œuvre par le système de contrôle 13 qui commande la première machine électrique 11 pour qu'elle fonctionne en mode générateur électrique et alimente en électricité la deuxième machine électrique 12 qui fonctionne en mode moteur électrique. Un transformateur peut être disposé entre la première machine électrique 11 et la deuxième machine électrique 12 afin d'adapter le courant électrique.

Selon une solution possible, la première machine électrique 11 est alimentée électriquement lorsqu'elle fonctionne en mode moteur électrique par une batterie 14.

Selon une autre solution possible, la première machine électrique 11 est alimentée électriquement lorsqu'elle fonctionne en mode moteur électrique par la deuxième machine électrique 12 qui fonctionne en mode générateur électrique 12, la deuxième machine électrique 12 générant de l'électricité en prélevant de la puissance mécanique sur l'arbre basse pression 9 (étape 150). La Demanderesse s'est en effet rendu compte qu'il est avantageux d'assurer d'abord une accélération rapide du corps haute pression, puis du corps basse pression. Un transformateur peut être disposé entre la première machine électrique 11 et la deuxième machine électrique 12 afin d'adapter le courant électrique.

Selon une variante possible permettant de réduire le risque de pompage du compresseur haute pression 4, le système de contrôle 13 est configuré pour mettre en œuvre une étape de surveillance du compresseur haute pression 4. Cette étape de surveillance du compresseur haute pression 4 est réalisée en déterminant un paramètre de pompage du compresseur haute pression et en injectant de la puissance mécanique sur l'arbre haute pression 8 lorsque ledit paramètre de pompage du compresseur haute pression 4 atteint une valeur seuil. Le pompage est le phénomène par lequel une inversion du sens d'écoulement du flux d'air se produit à cause d'une différence de pression trop importante entre l'entrée du compresseur et la sortie du compresseur.

Le paramètre de pompage du compresseur haute pression 4 peut être déterminé à partir du rapport de pression dudit compresseur haute pression 4, c'est-à-dire le rapport entre la pression en sortie du compresseur haute pression 4 et la pression en entrée dudit compresseur haute pression 4, et du débit dudit compresseur haute pression 4. La turbomachine 1 peut donc comprendre un premier capteur de pression qui est configuré pour mesurer la pression en entrée du compresseur haute pression 4, ainsi qu'un second capteur de pression qui est configuré pour mesurer la pression en sortie du compresseur haute pression 4, le premier capteur de pression et le second capteur de pression étant reliés au système de contrôle 13. La turbomachine peut également comprendre un débitmètre qui est configuré pour mesurer le débit d'air dans le compresseur haute pression 4, ledit débitmètre étant relié au système de contrôle 13.

Ainsi, le fait que le système de contrôle 13 soit configuré pour surveiller l'évolution du paramètre de pompage et commander l'injection de puissance mécanique sur le compresseur haute pression 4 lorsque la valeur du paramètre de pompage indique qu'un phénomène de pompage est susceptible de se produire, permet de réduire le risque de pompage.

Cette étape de surveillance du compresseur haute pression 4 est réalisée tout au long du procédé et simultanément avec les autres étapes. Lorsque de la puissance mécanique est injectée sur le compresseur haute pression 4 car le paramètre de pompage dudit compresseur haute pression 4 a atteint la valeur seuil, le bridage de la vitesse de l'arbre haute pression 8 est temporairement arrêté le temps que le paramètre de pompage repasse en dessous de la valeur seuil.

## Revendications

1. Procédé de régulation d'une accélération d'une turbomachine (1), la turbomachine (1) comprenant une chambre de combustion (5), une turbine haute pression (6) située en aval de la chambre de combustion (5) et qui entraine en rotation un arbre haute pression (8), et une turbine base pression (7) située en aval de la turbine haute pression (6) et qui entraine en rotation un arbre basse pression (9), **caractérisé en ce que** le procédé comprend les étapes suivantes :
- Injection (100) de puissance mécanique sur l'arbre haute pression (8) jusqu'à ce qu'un régime de l'arbre haute pression (8) atteigne une valeur cible, puis
- Prélèvement (200) de puissance mécanique sur l'arbre haute pression (8) de sorte à maintenir le régime à la valeur cible,
les étapes d'injection et de prélèvement de puissance mécanique sur l'arbre haute pression étant réalisées par une première machine électrique en mode générateur électrique pour le prélèvement ou en mode moteur électrique pour l'injection,
**caractérisé en ce que** le procédé comprend en parallèle de l'étape d'injection (100) de puissance mécanique sur l'arbre haute pression, une étape de prélèvement (150) de puissance mécanique sur l'arbre basse pression (9), et en parallèle de l'étape de prélèvement (200) de puissance mécanique sur l'arbre haute pression (8), une étape d'injection (250) de puissance mécanique sur l'arbre basse pression (9), les étapes de prélèvement et d'injection de puissance mécanique sur l'arbre basse pression étant réalisées par une deuxième machine électrique (12) en mode moteur électrique pour l'injection ou générateur électrique pour le prélèvement.

2. Procédé selon la revendication 1, dans lequel la turbomachine (1) comprend un compresseur haute pression (4) qui est situé en amont de la chambre de combustion (5) et qui est entrainé en rotation par l'arbre haute pression (8), le procédé comprenant l'étape suivante : surveillance du compresseur haute pression (4) en déterminant un paramètre de pompage du compresseur haute pression (4), l'étape d'injection (100) de puissance mécanique sur l'arbre haute pression (8) étant réalisée si le paramètre de pompage du compresseur haute pression (4) atteint une valeur seuil.

3. Turbomachine (1) pour aéronef comprenant :
- une turbine haute pression (6) qui est située en aval d'une chambre de combustion (5) et qui est reliée à un arbre haute pression (8) ;
- une turbine basse pression (7) qui est située en aval de la turbine haute pression (6) et qui est reliée à un arbre basse pression (9) ;
- un dispositif d'injection (11) de puissance mécanique sur l'arbre haute pression (8) ;
- un dispositif de prélèvement (11) de puissance mécanique sur l'arbre haute pression (8) ;
- un système de contrôle (13) qui est reliée au dispositif d'injection (11) et au dispositif de prélèvement (11), le système de contrôle (13) étant configuré pour mettre en œuvre le procédé de régulation d'accélération de la turbomachine selon l'une quelconque des revendications 1 ou 2,
le dispositif d'injection (11) étant une première machine électrique (11) configurée pour fonctionner en mode moteur électrique, et le dispositif de prélèvement (11) étant la première machine électrique (11) configurée pour fonctionner en mode générateur électrique,
la turbomachine (1) comprenant également une deuxième machine électrique (12) reliée à l'arbre basse pression (9) et configurée pour fonctionner en mode moteur électrique et injecter de la puissance mécanique sur l'arbre basse pression (9) et pour fonctionner en mode générateur électrique et prélever de la puissance mécanique sur l'arbre basse pression (9).

## Patentansprüche

1. Verfahren zur Regelung der Beschleunigung einer Turbomaschine (1), wobei die Turbomaschine (1) eine Brennkammer (5), eine Hochdruckturbine (6), die sich stromabwärts der Brennkammer (5) befindet und die eine Hochdruckwelle (8) dreht, und eine Niederdruckturbine (7), die sich stromabwärts der Hochdruckturbine (6) befindet und die eine Niederdruckwelle (9) dreht, umfasst, **dadurch gekennzeichnet, dass** das Verfahren die folgenden Schritte umfasst:
- Einspritzen (100) von mechanischer Leistung auf der Hochdruckwelle (8), bis eine Drehzahl der Hochdruckwelle (8) einen Sollwert erreicht, dann
- Entnehmen (200) von mechanischer Leistung auf der Hochdruckwelle (8), um die Drehzahl auf dem Sollwert zu halten,
wobei die Schritte des Einspritzens und des Entnehmens von mechanischer Leistung auf der Hochdruckwelle durch eine erste elektrische Maschine in elektrischem Generatormodus für das Entnehmen oder in elektrischem Motormodus für das Einspritzen umgesetzt werden,
**dadurch gekennzeichnet, dass** das Verfahren parallel zu dem Schritt des Einspritzens (100) von mechanischer Leistung auf der Hochdruckwelle einen Schritt des Entnehmens (150) von mechanischer Leistung auf der Niederdruckwelle (9) und parallel zu dem Schritt des Entnehmens (200) von mechanischer Leistung auf der Hochdruckwelle (8) einen Schritt des Einspritzens (250) von mechanischer Leistung auf der Niederdruckwelle (9) umfasst, wobei die Schritte des Entnehmens und des Einspritzens von mechanischer Leistung auf der Niederdruckwelle durch eine zweite elektrische Maschine (12) in elektrischem Motormodus für das Einspritzen oder elektrischem Generatormodus für das Entnehmen umgesetzt werden.

2. Verfahren nach Anspruch 1, wobei die Turbomaschine (1) einen Hochdruckverdichter (4), der sich stromaufwärts der Brennkammer (5) befindet und der durch die Hochdruckwelle (8) gedreht wird, umfasst, wobei das Verfahren den folgenden Schritt umfasst: Überwachen des Hochdruckverdichters (4) durch Bestimmen eines Pumpparameters des Hochdruckverdichters (4), wobei der Schritt des Einspritzens (100) von mechanischer Leistung auf der Hochdruckwelle (8) umgesetzt wird, wenn der Pumpparameter des Hochdruckverdichters (4) einen Schwellenwert erreicht.

3. Turbomaschine (1) für ein Luftfahrzeug, umfassend:
- eine Hochdruckturbine (6), die sich stromabwärts einer Brennkammer (5) befindet und die mit einer Hochdruckwelle (8) verbunden ist,
- eine Niederdruckturbine (7), die sich stromabwärts der Hochdruckturbine (6) befindet und die mit einer Niederdruckwelle (9) verbunden ist,
- eine Einspritzvorrichtung (11) für mechanische Leistung auf der Hochdruckwelle (8),
- eine Entnahmevorrichtung (11) für mechanische Leistung auf der Hochdruckwelle (8),
- ein Steuersystem (13), das mit der Einspritzvorrichtung (11) und mit der Entnahmevorrichtung (11) verbunden ist, wobei das Steuersystem (13) dazu ausgestaltet ist, das Verfahren zur Regelung der Beschleunigung der Turbomaschine nach einem der Ansprüche 1 oder 2 zu implementieren, wobei die Einspritzvorrichtung (11) eine erste elektrische Maschine (11) ist, die dazu ausgestaltet ist, in elektrischem Motormodus zu arbeiten, und die Entnahmevorrichtung (11) die erste elektrische Maschine (11) ist, die dazu ausgestaltet ist, in elektrischem Generatormodus zu arbeiten,
wobei die Turbomaschine (1) auch eine zweite elektrische Maschine (12) umfasst, die mit der Niederdruckwelle (9) verbunden und dazu ausgestaltet ist, in elektrischem Motormodus zu arbeiten und die mechanische Leistung auf der Niederdruckwelle (9) einzuspritzen und in elektrischem Generatormodus zu arbeiten und mechanische Leistung auf der Niederdruckwelle (9) zu entnehmen.

## Claims

1. A method for regulating an acceleration of a turbomachine (1), the turbomachine (1) comprising a combustion chamber (5), a high-pressure turbine (6) located downstream of the combustion chamber (5) and which drives a high-pressure shaft (8) in rotation, and a low-pressure turbine (7) located downstream of the high-pressure turbine (6) and which drives a low-pressure shaft (9) in rotation, **characterized in that** the method comprises the following steps:
- Injecting (100) mechanical power onto the high-pressure shaft (8) until a speed of the high-pressure shaft (8) attains a target value, then
- Extracting (200) mechanical power from the high-pressure shaft (8) so as to maintain the speed at the target value,
the steps of injecting and extracting mechanical power from the high-pressure shaft (8) being accomplished by means of a first electrical machine (11) in the electrical generator mode for the extraction or in the electrical motor mode for the injection,
**characterized in that** the method comprises in parallel with the step of injecting (100) mechanical power onto the high-pressure shaft (8), a step of extracting (150) mechanical power from the low-pressure shaft (9), and in parallel with the step of extracting (200) mechanical power from the high-pressure shaft (8), a step of injecting (250) mechanical power onto the low-pressure shaft (9), the steps of injecting (250) and extracting (150) mechanical power onto the low-pressure shaft (9) being accomplished by a second electrical machine (12) in the electric motor mode for the injection or in the electrical generator mode for the extraction.

2. The method according to claim 1, wherein the turbomachine (1) comprises a high-pressure compressor (4) which is located upstream of the combustion chamber (5) and which is driven in rotation by the high-pressure shaft (8), the method comprising the following step: monitoring the high-pressure compressor (4) by determining a surging parameter of the high-pressure compressor (4), the step of injecting (100) mechanical power onto the high-pressure shaft (8) being accomplished if the surging parameter of the high-pressure compressor (4) attains a threshold value.

3. A turbomachine (1) for aircraft comprising:
- a high-pressure turbine (6) which is located downstream of a combustion chamber (5) and which is connected to a high-pressure shaft (8);
- a low-pressure turbine (7) which is located downstream of the high-pressure turbine (6) and which is connected to a low-pressure shaft (9);
- a device (11) for injecting mechanical power onto the high-pressure shaft (8);
- a device (11) for extracting mechanical power from the high-pressure shaft (8);
- a control system (13) which is connected to the injection device (11) and to the extracting device (11), the control system (13) being configured to implement the method for regulating the acceleration of the turbomachine according to any one of claims 1 or 2,
the injection device (11) being a first electrical machine (11) configured to operate in the electric motor mode, and the extracting device (11) being the first electrical machine (11) configured to operate in the electrical generator mode,
the turbomachine comprising a second electrical machine (12) which is connected to the low-pressure shaft (9) and which is configured to operate in the electric motor mode and to inject mechanical power onto the low-pressure shaft (9), and configured to operate in the electrical generator mode and to extract mechanical power from the low-pressure shaft (9).
